# FASCICULE DE BREVET EUROPEEN

(11) **EP 2 132 056 B1**
(45) Date de publication et mention de la délivrance du brevet: **26.10.2011**
(21) Numéro de dépôt: 08762171.0
(22) Date de dépôt: 28.02.2008
(51) Int. Cl.: B60K 37/04

(54) **Tableau de bord de véhicule automobile comprenant une structure de planche de bord et une visière**
Armaturentafel eines Kraftfahrzeugs umfassend ein Armaturenbrett und eine Sichtblende
Instrument panel of a motor vehicle comprising a dashboard and a visor

(30) Priorité: 06.03.2007 FR 0753661
(43) Date de publication de la demande: 16.12.2009
(73) Titulaire: Renault SAS, 92100 Boulogne Billancourt (FR)
(72) Inventeur: MARCEAU, Thierry, F-92500 Rueil Malmaison (FR); PRENEL, Frederic, F-78830 Bullion (FR); LE LEIZOUR, Alban, F-78580 Maule (FR)
(86) Numéro de dépôt international: PCT/FR2008/050336
(87) Numéro de publication internationale: WO 2008/119908

(56) Documents cités:
- EP-A- 1 400 392
- US-A1- 2005 253 409

## Description

L'invention concerne le domaine des tableaux de bord d'un véhicule automobile. L'invention concerne plus parliculièrement un agencement pour la fixation d'une visière sur une structure de planche de bord d'un véhicule automoblle, comforme an preambule de la revendication 1. Un tel agencement est connu de l'homme du métier, notamment par l'exemple qu'en donne le document US 2005/0253409.

Une visière de tableau de bord d'un véhicule automobile permet généralement de masquer des reflets indésirables qui proviennent de différents éléments d'affichage par réflexion sur le pare-brise. L'afficheur peut être éclairé ou rendu luminescent dans des conditions de forte luminosité, et peut alors gêné la vision du conducteur. La visière permet également de réduire une mauvaise visibilité due à une réflexion des rayons du soleil par exemple, à travers le pare brise.

Les éléments d'affichage, qui rendent les informations accessibles au conducteur comme aux passagers, sont classiquement disposés au niveau du poste de conduite, situés du côté conducteur. Les éléments d'affichage peuvent être déportés vers le centre de la planche de bord, entre le côté conducteur et le côté passager. Dans ce cas là, la planche de bord du côté passager comporte de manière classique des dispositifs de protection à coussin d'air gonflable, généralement appelés « airbag » qui permettent d'assurer la sécurité de celui-cl lors d'un accident par exemple. Ils sont généralement disposés dans une trappe, sous la paroi extérieure du tableau de bord Ainsi lors d'un choc, le coussin d'air se gonfle instantanément provoquant l'ouverture de la trappe.

Les dispositifs d'affichage et d'informations destinées au conducteur deviennent de plus en plus nombreux et une agencement consistant à concentrer les différents éléments au centre de la planche de bord peut alors nécessiter la mise en place d'une visière de dimensions différentes, plus large et plus haute. Toutefois, en cas d'accident, l'irruption du coussin d'air du côté passager peut provoquer le décrochement d'une telle visière du tableau de bord. En effet, pour des raisons techniques de falsabilité, la visière est un élément rapporté sur le tableau de bord, qui coopère avec celui-ci par l'intermédiaire de moyens de fixation classiques tels que des languettes de fixation munies de dispositifs de clip. La visière n'est alors plus solidaire de la planche de bord.

Afin de palier à ces inconvénients, un but de l'invention est de proposer un agencement amélioré, et simple, d'une visière rapportée sur une planche de bord.

Dans ce but, l'invention a pour objet un tableau de bord de véhicule automobile tel que défini dans les revendication

Cet agencement est simple à réaliser et permet un assemblage en aveugle rapide et efficace.

La fixation supplémentaire par vissage, en palus des fixations par clippage permet à la fois de positionner et de guider la visière sur la structure de planche de bord. Un tel agencement convient avantageusement à toute visière de toute taille.

L'invention sera mieux comprise par la description ci-après d'un mode de réalisation donnés titre d'exemple non limitatif en référence aux dessins annexés, sur lesquels:
- la figure 1 représente une vue ou perspective d'un agencement pour la fixation d'une visière sur une structure de planche de bord.
- la figure 2 représenté une vue en coupe transversal de la structure de planche de bord.

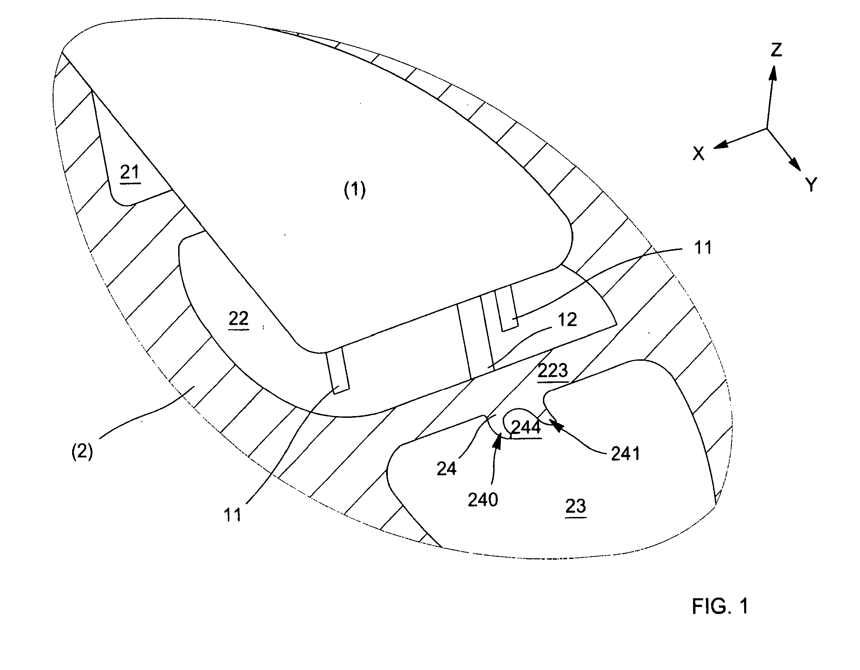

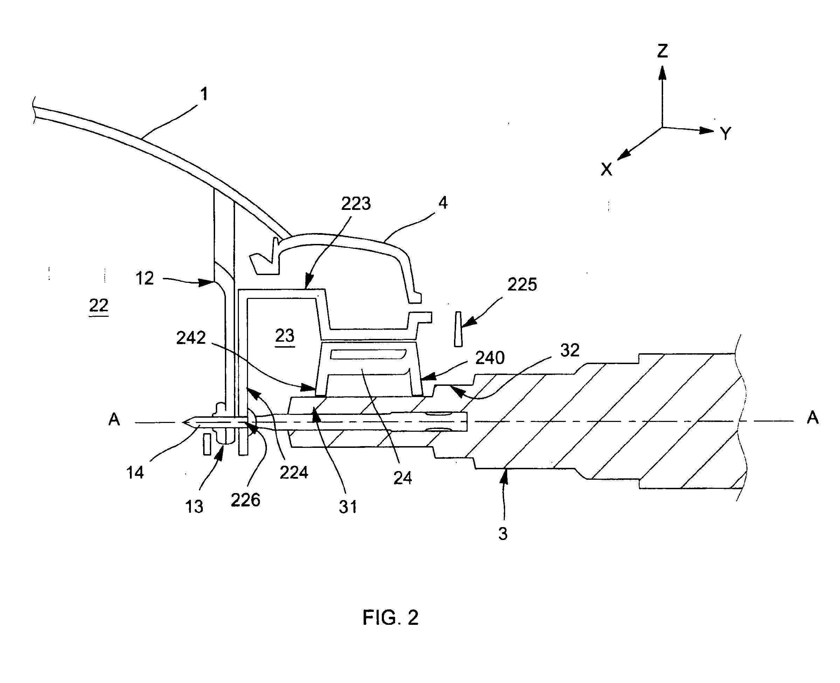

Dans la description qui suit, nous prendrons à litre non limitatif une orientation longitudinale, verticale et transversale indiquée par le trièdre X, Z, Y des figures 1 et 2.

Aux figures 1 et 2, on a représenté un agencement pour la fixation d'une visière 1 sur une planche de bord d'un véhicule automobile.

La planche de bord comporte une peau 4 et une structure de planche de bord 2. La Structure de palanche de bord 2 comporte trois logements 21,22,23 destinés à recevoir divers éléments.

Le logement 22 détint dans la structure de planche de bord 2, et disposé au centre de celle-ci, est destiné à recevoir suivant une direction d'introduction verticale Z, les dispositifs d'affichage et la visière 1, Le logement 23 est défini dans la structure de planche de bord 2 du côté du passager et est destiné à recevoir un dispositif de protection à coussin d'air pour la protection du passager. Le logement 23 présente un pourtour 223 commun au logement 22, sensiblement de direction longitudinale X.

A la figure 2, le pourtour 223 comporte une première face 224 adjacente au logement 22 et une deuxième face 225 adjacente au logement 23.

Un orifice de fixation 226 est défini dans la première face 224 et permet le passage d'un moyen de fixation tel qu'une vis de fixation 14 pour fixer la visière 1 à la structure de planche de bord 2.

La visière 1, destinée à être disposée au centre de la planche de bord 2, comporte de manière classique des premiers moyens de fixation tels que des moyens de fixation rapide ou languettes de fixation 11 comportant par exemple des dispositifs de clips, qui s'étendent suivant la direction verticale d'introduction Z. Les languettes de fixation 11 sont aptes à coopérer avec des deuxièmes moyens de fixation associés tels que des languettes ou des orifices de réception (non représentés) portés par le pourtour du logement 22 de la structure de planche de bord 2. La visière 1 comporte en plus des languettes de fixation 11, au moins un moyen de fixation 12 supplémentaire permettant de fixer la visière 1 à la structure de planche de bord 2 par l'intermédiaire d'un appareil de fixation 3 tel qu'une visseuse 3, de façon à ce que la visière reste solidaire de la planche de bord lorsque le coussin d'air se gonfle instantanément lors d'un accident.

Tel que représenté sur les figures 1 et 2, le moyen de fixation 12 est une languette ou patte de fixation, apte à coopérer avec le pourtour commun 223 aux logements 22 et 23, de façon à ce que la fixation entre la visière 1 et la structure de la planche de bord 2 soit la plus efficace possible en cas d'irruption instantanée du coussin d'air. Il est en effet plus avantageux de disposer une languette de fixation 12 à proximité du logement du coussin d'air pour limiter les risques d'un décrochage de la visière 1.

Pour induire moins d'efforts sur la languette de fixation et assurer une meilleure tenue de la visière en cas d'irruption du dispositif de protection à coussin d'air, la languette de fixation 12 est solidarisée avec le pourtour commun 223, et est de préférence disposée au centre de ce pourtour. La fixation de la visière est optimisée et les risques de décrochage, même partiel, lors de l'irruption du dispositif de protection sont ainsi limités.

Sur les figures, la languette de fixation 12 prolonge la visière 1 dans sa direction d'introduction verticale Z et comporte un écrou 13. L'écrou 13 est prépositionné dans la languette de fixation 12, et est destiné à coopérer avec l'orifice de fixation 226 prévu à cet effet dans la première face 224 du pourtour commun 223.

La longueur de la languette de fixation 12 est telle qu'une fois la visière 1 positionnée dans son logement 22, l'écrou 13 et l'orifice de fixation 226 sont disposés selon un même axe de vissage AA, dans la direction transversale Y.

Pour permettre la fixation de la visière 1 sur la structure de planche de bord 2, le pourtour commun 223 comporte un élément de guidage 24 permettant le passage de la visseuse 3.

Tel que représenté sur la figure 2, l'élément de guidage 24 est un élément rapporté à la structure de la planche de bord 2. Il sera compris que l'élément de guidage peut être venu de matière avec la structure de la planche de bord 2.

L'élément de guidage 24 et la visseuse 3 ont des formes adaptées de manière à ce qu'un opérateur puisse fixer la visière 1 à la structure de planche de bord 2 en aveugle. A cet effet, l'élément de guidage 24 comporte des languettes latérales 240,241,242,243 formant un rail de guidage, de direction transversale Y, perpendiculaires au pourtour commun 223, faisant apparaître un logement 244 pour le passage de la visseuse 3. Le rail de guidage comporte quatre languettes latérales 240,241,242,243 disposées deux à deux de part et d'autre du logement 244. Ainsi une partie avant de l'élément de guidage 24 comporte une première languette latérale gauche 240 et une première languette latérale droite 241. Une partie arrière de l'élément de guidage 24 comporte une deuxième languette latérale gauche 242 et une deuxième languette latérale droite 243 (non représentée). Il sera compris que le nombre de languettes latérales est donné à titre d'exemple non limitatif. L'élément de guidage 24 peut par exemple comporter une languette latérale gauche 240 de direction transversale Y, disposée le long de l'élément de guidage 24, et une languette latérale droite 241 disposée dans la direction transversale Y, le long de l'élément de guidage 24, de façon à permettre un appui continu de la visseuse 3 contre l'élément de guidage 24 et un meilleur guidage en aveugle de la visseuse.

La position des rails de guidage 240,241,242,243 dépend de la position de la languette de fixation 12. Conformément aux figures 1 et 2, les rails de guidage sont disposés au centre du pourtour 223 commun aux logements 22 et 23.

La visseuse 3 comporte au moins un premier épaulement 31 s'étendant depuis l'axe de vissage AA dans la direction verticale Z, et un deuxième épaulement 32 s'étendant depuis le premier épaulement 31 dans la direction verticale Z.

L'élément de guidage 24 et le premier épaulement 31 sont en contact l'un avec l'autre et ont un mouvement de glissement l'un par rapport à l'autre. La longueur des languettes de guidage 240,241,242,243 et du premier épaulement 31 sont en effet adaptées de façon à ce que le premier épaulement 31 de la visseuse 3 et l'élément de guidage 24 permettent de bloquer le mouvement de la visseuse 3 dans la direction verticale Z, et de guider la visseuse 3 dans la direction transversale Y, le long de l'axe de fixation AA vers l'écrou 13 prépositionné dans la languette de fixation 12.

Le deuxième épaulement 32 forme une butée permettant d'arrêter la course en Y de la visseuse 3 lorsque la première face 224 du pourtour commun 223 de la planche de bord 2 est complètement vissée à la languette de fixation 12 de la visière 1.

De tels rails de guidage 240,241,242,243 coopérant avec une telle visseuse 3 permettent donc avantageusement de guider la visseuse 3 selon la direction transversale Y, les mouvements de la visseuse 3 selon les directions longitudinales X et verticale Z étant sensiblement limités. Un opérateur peut alors fixer la visière 1 sur la structure de planche de bord 2 en aveugle en plaçant simplement la visseuse 3 dans l'élément de guidage 24, à travers le logement 23 du coussin d'air. La course de la visseuse 3 est alors arrêtée lorsque la vis de fixation 14 et l'écrou prépositionné 13 sont serrés, c'est-à-dire lorsque le deuxième épaulement 32 de la visseuse 3 vient au contact de l'élément de guidage 24.

Pour permettre une fixation simple et rapide de la visière 1 sur la structure de planche de bord 2, il suffit donc pour un seul opérateur de procéder à une première étape de positionnement de la visière 1 dans son logement 22 défini dans la structure de planche de bord 2, et de la fixer dans un premier temps par l'intermédiaire des moyens de fixation rapide tels que définis ci-dessus. Une deuxième étape consiste ensuite à passer la visseuse 3 par l'intermédiaire du logement 23 du coussin d'air, et de placer cette visseuse 3 dans l'élément de guidage 24, dans le logement 244 prévu à cet effet. Une dernière étape consiste alors à fixer l'élément de fixation 14, c'est-à-dire à visser la vis de fixation 14.

Un tel procédé de montage de l'agencement de la visière 1 sur la structure de planche de bord 2 est simple et rapide à réaliser. Il ne nécessite que l'intervention d'un seul opérateur.

Un tel agencement permet de solidariser la visière 1 avec la structure de planche de bord 2. Cet agencement selon l'invention est simple à réaliser et permet un assemblage en aveugle rapide et efficace. L'accès au vissage par le logement du dispositif de protection à coussin d'air gonflable peut être réalisé à tout moment lors de l'assemblage des éléments de la planche de bord.

La fixation supplémentaire par vissage, en plus des fixations par clippage permet de positionner et de guider la visière 1 sur la structure de planche de bord 2.

Par ailleurs, la vis de fixation 14 n'est pas visible sur le produit fini et n'altère pas l'aspect visuel et esthétique de la planche de bord.

Un tel agencement convient avantageusement à toute visière de toute taille.

## Revendications

1. Tableau de bord de véhicule automobile comprenant une structure de planche de bord et une visière (1), la visière étant apte à être rapportée sur ladite structure de planche de bord (2) par l'intermédiaire d'un appareil de fixation (3),
a. ladite visière (1) comportant des premiers moyens de fixation (11)
b. ladite structure de planche de bord (2) comportant
i. au moins deux logements (22,23) adjacents , définis dans ladite structure (2), respectivement destinés à recevoir ladite visière (1) et un dispositif de protection du passager à coussin d'air gonflable, disposés de part et d'autre d'un pourtour commun (223),
ii. des deuxièmes moyens de fixation aptes à coopérer avec les premiers moyens de fixation associés à la visière (1),
**caractérisé en ce que** ladite visière (1) comporte au moins un moyen de fixation supplémentaire (12) distinct des premiers moyens de fixation rapides (11), apte à coopérer avec ledit pourtour commun (223) et **en ce que** ladite structure de planche de bord (2) comporte un élément de guidage (24) adapté à guider l'appareil de fixation (3) de manière à solidariser la visière (1) à ladite structure de planche de bord (2).

2. Tableau de bord selon la revendication 1 **caractérisé en ce que** le moyen de fixation supplémentaire (12) et l'élément de guidage (24) sont disposés au centre du pourtour commun (223).

3. Tableau de bord selon l'une quelconque des revendications précédentes **caractérisé en ce que** le moyen de fixation supplémentaire (12) est une languette de fixation (12) comportant un écrou (13) prépositionné adapté à coopérer avec un orifice de fixation (226) défini dans une première face (224) du pourtour commun (223), ladite première face (224) étant adjacente au logement (22) conforme destiné à recevoir la visière (1).

4. Tableau de bord selon la revendication 3 **caractérisé en ce que**, l'appareil de fixation (3) comportant un premier épaulement (31), l'élément de guidage (24) et le premier épaulement (31) sont aptes à être en contact l'un avec l'autre, définissant un mouvement de glissement l'un par rapport à l'autre de manière à permettre le guidage dudit appareil de fixation (3), selon un axe de fixation (AA) vers l'écrou (13) prépositionné dans le moyen de fixation supplémentaire (12).

5. Tableau de bord selon la revendication 4 **caractérisé en ce que**, l'appareil de fixation (3) comportant un deuxième épaulement (32) s'étendant depuis le premier épaulement (31) suivant la direction transversale Y, l'élément de guidage (24) et ledit deuxième épaulement (32) sont aptes à venir en contact l'un avec l'autre, de sorte que le deuxième épaulement (32) forme une butée permettant d'arrêter la course de l'appareil de fixation (3) lorsque la première face (224) du pourtour commun (223) de la planche de bord (2) est complètement fixée au moyen de fixation (12) de la visière (1).

6. Tableau de bord selon l'une quelconque des revendications précédentes **caractérisé en ce que** l'élément de guidage (24) comporte au moins deux languettes (240,241) sensiblement perpendiculaires au pourtour commun (223), formant un rail de guidage (24) s'étendant dans la direction transversale Y, apte au passage et au guidage de l'appareil de fixation (3).

7. Tableau de bord selon l'une des revendications précédentes **caractérisé en ce que** l'élément de guidage (24) est un élément rapporté ou venu de matière avec ledit pourtour commun (224).

## Claims

1. Instrument panel for a motor vehicle comprising a facia panel structure and a visor (1), the visor being capable of being fitted to the said facia panel structure (2) by means of an attachment apparatus (3),
a. the said visor (1) comprising first attachment means (11)
b. the said facia panel structure (2) comprising
i. at least two adjacent housings (22,23) defined in the said structure (2), respectively designed to receive the said visor (1) and an air-bag passenger-protection device, the said housings being placed on either side of a common surround (223),
ii. second attachment means capable of interacting with the first attachment means associated with the visor (1),
**characterized in that** the said visor (1) comprises at least one additional attachment means (12) distinct from the first rapid attachment means (11), capable of interacting with the said common surround (223) and **in that** the said facia panel structure (2) comprises a guide element (24) suitable for guiding the attachment apparatus (3) so as to secure the visor (1) to the said facia panel structure (2).

2. Instrument panel according to Claim 1, **characterized in that** the additional attachment means (12) and the guide element (24) are placed in the centre of the common surround (223).

3. Instrument panel according to either one of the preceding claims, **characterized in that** the additional attachment means (12) is an attachment strip (12) comprising a prepositioned nut (13) suitable for interacting with an attachment orifice (226) defined in a first face (224) of the common surround (223), the said first face (224) being adjacent to the corresponding housing (22) designed to receive the visor (1).

4. Instrument panel according to Claim 3, **characterized in that**, since the attachment apparatus (3) comprises a first shoulder (31), the guide element (24) and the first shoulder (31) are capable of being in contact with one another, defining a sliding movement relative to one another so as to allow the guidance of the said attachment apparatus (3) along an attachment axis (AA) towards the nut (13) that is prepositioned in the additional attachment means (12).

5. Instrument panel according to Claim 4, **characterized in that**, since the attachment apparatus (3) comprises a second shoulder (32) extending from the first shoulder (31) in the transverse direction Y, the guide element (24) and the said second shoulder (32) are capable of coming into contact with one another so that the second shoulder (32) forms an abutment making it possible to stop the travel of the attachment apparatus (3) when the first face (224) of the common surround (223) of the facia panel (2) is completely attached to the attachment means (12) of the visor (1).

6. Instrument panel according to any one of the preceding claims, **characterized in that** the guide element (24) comprises at least two strips (240,241) that are substantially perpendicular to the common surround (223), forming a guide rail (24) extending in the transverse direction Y, suitable for the passage and guidance of the attachment apparatus (3).

7. Instrument panel according to one of the preceding claims, **characterized in that** the guide element (24) is an element that is fitted to or made in one piece with the said common surround (224).

## Patentansprüche

1. Kraftfahrzeug-Instrumententafel, die eine Armaturenbrettstruktur und eine Sichtblende (1) enthält, wobei die Sichtblende mittels eines Befestigungsgeräts (3) auf die Armaturenbrettstruktur (2) aufgesetzt werden kann,
a. wobei die Sichtblende (1) erste Befestigungseinrichtungen (11) aufweist,
b. wobei die Armaturenbrettstruktur (2) aufweist:
i. mindestens zwei benachbarte Aufnahmen (22, 23), die in der Struktur (2) definiert und dazu bestimmt sind, die Sichtblende (1) bzw. eine Fahrgast-Schutzvorrichtung mit Airbag aufzunehmen, die zu beiden Seiten einer gemeinsamen Umrandung (223) angeordnet sind,
ii. zweite Befestigungseinrichtungen, die mit den ersten, der Sichtblende (1) zugeordneten Befestigungseinrichtungen zusammenwirken können,
**dadurch gekennzeichnet, dass** die Sichtblende (1) mindestens eine zusätzliche Befestigungseinrichtung (12) aufweist, die sich von den ersten Schnellbefestigungseinrichtungen (11) unterscheidet und mit der gemeinsamen Umrandung (223) zusammenwirken kann, und dass die Armaturenbrettstruktur (2) ein Führungselement (24) aufweist, das das Befestigungsgerät (3) so führen kann, dass die Sichtblende (1) fest mit der Armaturenbrettstruktur (2) verbunden wird.

2. Instrumententafel nach Anspruch 1, **dadurch gekennzeichnet, dass** die zusätzliche Befestigungseinrichtung (12) und das Führungselement (24) in der Mitte der gemeinsamen Umrandung (223) angeordnet sind.

3. Instrumententafel nach einem der vorhergehenden Ansprüche, **dadurch gekennzeichnet, dass** die zusätzliche Befestigungseinrichtung (12) eine Befestigungszunge (12) ist, die eine vorpositonierte Mutter (13) aufweist, welche geeignet ist, um mit einer Befestigungsöffnung (226) zusammenzuwirken, die in einer ersten Seite (224) der gemeinsamen Umrandung (223) definiert ist, wobei die erste Seite (224) der entsprechenden Aufnahme (22) benachbart ist, die dazu bestimmt ist, die Sichtblende (1) aufzunehmen.

4. Instrumententafel nach Anspruch 3, **dadurch gekennzeichnet, dass**, da das Befestigungsgerät (3) eine erste Schulter (31) aufweist, das Führungselement (24) und die erste Schulter (31) miteinander in Kontakt sein können, indem sie eine Gleitbewegung zueinander definieren, um die Führung des Befestigungsgeräts (3) gemäß einer Befestigungsachse (AA) in Richtung der in der zusätzlichen Befestigungseinrichtung (12) vorpositionierten Mutter (13) zu erlauben.

5. Instrumententafel nach Anspruch 4, **dadurch gekennzeichnet, dass**, da das Befestigungsgerät (3) eine zweite Schulter (32) aufweist, die sich von der ersten Schulter (31) in der Querrichtung Y erstreckt, das Führungselement (24) und die zweite Schulter (32) miteinander in Kontakt kommen können, so dass die zweite Schulter (32) einen Anschlag bildet, der den Weg des Befestigungsgeräts (3) stoppen kann, wenn die erste Seite (224) der gemeinsamen Umrandung (223) des Armaturenbretts (2) vollständig an der Befestigungseinrichtung (12) der Sichtblende (1) befestigt ist.

6. Instrumententafel nach einem der vorhergehenden Ansprüche, **dadurch gekennzeichnet, dass** das Führungselement (24) mindestens zwei Zungen (240, 241) im Wesentlichen lotrecht zur gemeinsamen Umrandung (223) aufweist, die eine Führungsschiene (24) bilden, die sich in der Querrichtung Y erstreckt und für den Durchgang und die Führung des Befestigungsgeräts (3) geeignet ist.

7. Instrumententafel nach einem der vorhergehenden Ansprüche, **dadurch gekennzeichnet, dass** das Führungselement (24) ein aufgesetztes Element ist oder aus einem Stück mit der gemeinsamen Umrandung (224) besteht.
